# EUROPEAN PATENT APPLICATION

(11) **EP 1 168 571 A2**
(43) Date of publication of application: **02.01.2002**
(21) Application number: 01112495.5
(22) Date of filing: 22.05.2001
(51) Int. Cl.: H02K 3/22, H02K 9/19, H02K 9/193, H02K 3/487, H02K 15/00

(54) **Rotating machine having hollow stator field windings for coolant flow therein**

(30) Priority: 30.05.2000 US 580133
(71) Applicant: BAE SYSTEMS Controls, Inc., Johnson City, NY 13790-1888 (US)
(72) Inventor: Dawson, Peter Jawahr, Vestal, NY 13850 (US); Lyons, Arthur P., Maine, NY 13802 (US)
(74) Representative: Körber, Martin, Dipl.-Phys.

(57) **Abstract**

A rotating machine including a stator which has a plurality of field winding slots; a plurality of field windings (314), each having an internal conduit (316), each field winding slot having at least one field winding disposed therein; and a circulation system for circulating a coolant into and from the rotating machine through the internal conduit. Also provided is a top stick (342) for securing a slot liner (340) in a field winding slot of a stator for a rotating machine. The winding slot has a groove for acceptance of the top stick therein and the top stick has a tapered leading end for retaining a sealing material in the groove. Still yet provided is a method of sealing field windings in a field winding slot of a stator of the rotating machine.

## Description

### BACKGROUND OF THE INVENTION

### 1. Field of the Invention

The present invention relates generally to rotating machines such as electric motors and generators and, more particularly, to cooling the field windings of the stator of electric motors and generators.

### 2. Prior Art

There have been very many proposals intended to improve the operation of transducers for electrical power/mechanical power conversion (motors or generators). However, there are still areas where the use of electric motors remains impractical, for example for use as the main drive of a vehicle such as an automobile. Current electric motors are generally too large, heavy, and produce too little power (especially at high speed) for commercial use in a vehicle such as an automobile.

One problem associated with electrical machines, such as electric motors, is that it is necessary to cool them because they generate heat which reduces their efficiency. At present such machines may be cooled by blowing air through or over them. For heavy duty applications it is known to spray oil onto the rotor and stator assemblies and into the gap between them using a high pressure pump. A scavenger pump may also be provided to collect the sprayed oil for re-cycling. The need for optimization in cooling is even more important as some applications of electric motors demand high efficiency in compact packages.

A common configuration for such motors is to have an inner rotor mounted on a straight shaft supported by bearings on the ends. The bearings are mounted in end covers that support and locate the rotor in the center of a current-carrying stator. The rotor contains multiple current-carrying bars which run length wise parallel to the shaft and are located near the outer circumference of the rotor. Heat is produced in the rotor and stator when the current in the stator excites the bars. Heat dissipation limits the design of the stator.

In a typical electric rotating machine where heat dissipation is required, it is customary to cool the device with air or a liquid medium. If the cooling medium is a liquid, it is circulated in the outer structural jacket of the machine, whereas, if the medium is air, the flow is then routed through the center and outside shell of the device.

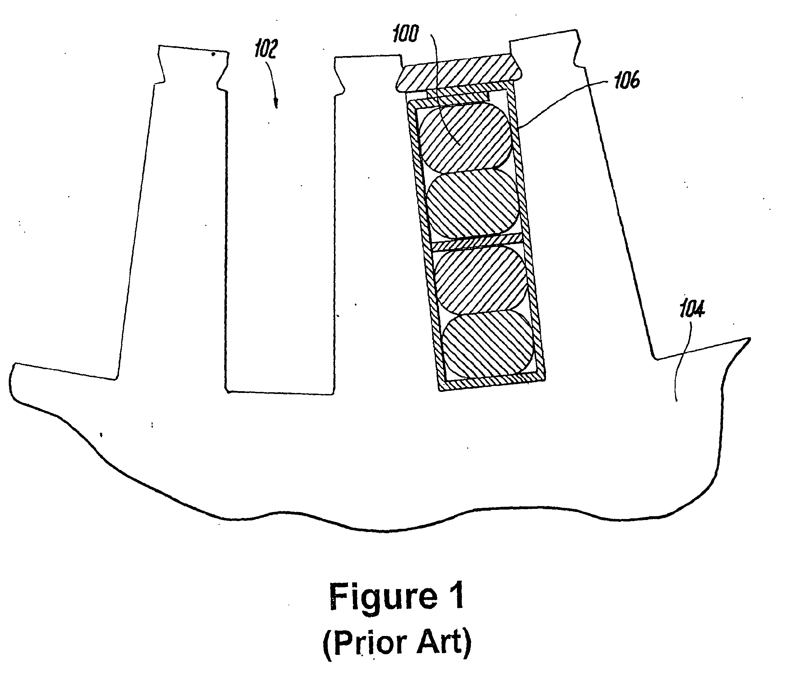

A transverse cross-section of the stator field windings of a prior-art motor is illustrated in Figure 1. In this design, the electromagnetic conductors 100 are housed in a slot 102 of a stator 104. The conductors 100 are cooled by the longitudinal flow of a synthetic oil between the interstices of the wires' large external radii and the region formed by an interior wall of a slot liner 106. Maintaining this cross-sectional area open along the longitudinal axis of the stator 104 has proven to be very problematic during the manufacturing process of the motor and this creates a high fluid flow pressure drop. This problem ultimately manifests itself when the fixed power output of the oil pump delivery system cannot deliver the designed mass flow of the oil that is needed to sufficiently cool the conductors 100 where enormous heat is generated due to internal electrical resistance.

This particular electric motor designed for an electric vehicular application produces 450 lb-ft of torque and 250 HP at normal steady state conditions but coolant oil leaking from the stator slots into the air gap between the stator and rotor bodies causes hydrodynamic drag which leads to significant power transmission inefficiencies. Furthermore, the incessant impact of the rotor into this entrapped oil causes hardware damage due to cavitation and heat build up. Thus, the cooling oil meant to absorb the heat from the conductors 100 typically leaks from the interstices, causing an obstruction to the mechanical function of the motor.

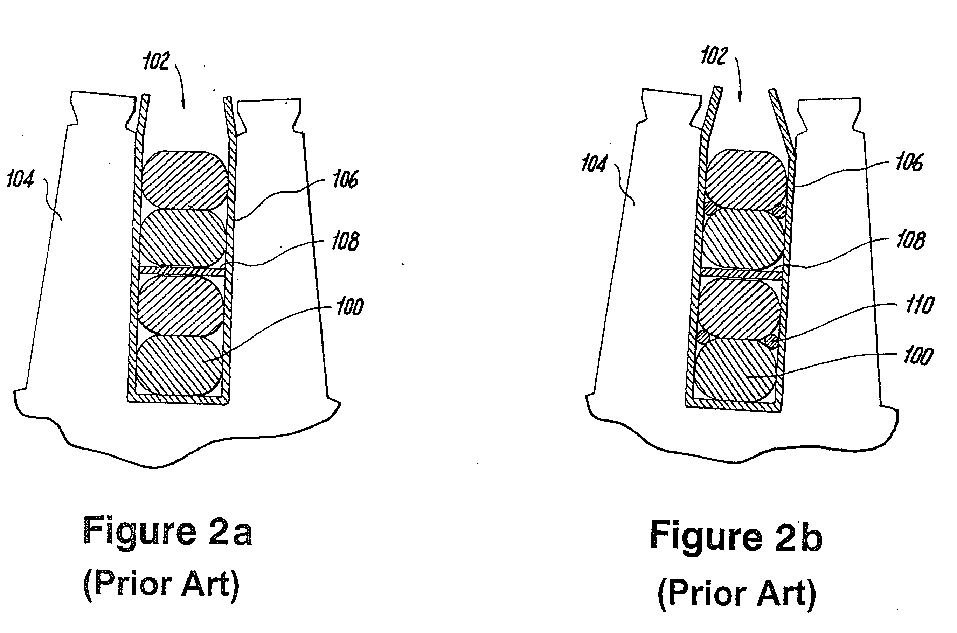

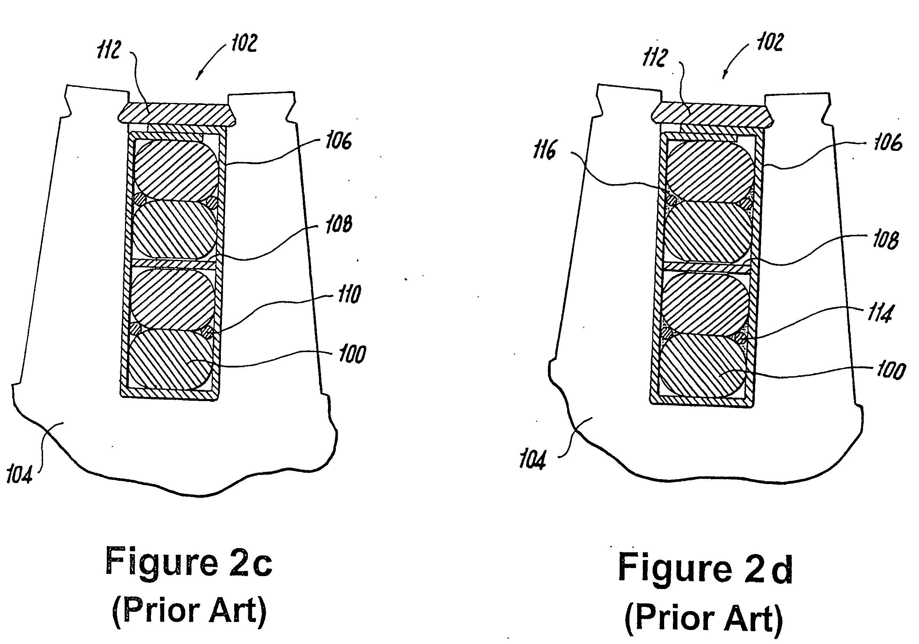

The process to form these interstices in each slot 102 is tedious and fraught with manufacturing risk. Figures 2a to 2d illustrate this. Figure 2a illustrates Nomex/Kapton/Nomex (NKN) slot liners 106 which are placed in each stator slot 102 followed by a pair of pre-formed solid magnetic conductors 100. A center stick 108 made of a modified fiberglass cloth saturated with a high temperature phenolic resin (PCGP-HT) material placed between them separates the upper and lower conductors 100. As illustrated in Figure 2b, four 0.030 in diameter steel wires 110 are then inserted into the interstitial space between the conductors 100 and slot liners 106. As illustrated in Figure 2c, a PCGP-HT top stick 112 is then carefully inserted into place. After making the welded connections on the wires and buss ring terminals, the entire stator sub-assembly is then dipped into a bath of Doryl B-109-9 electrical insulating varnish under vacuum. After the excess varnish is drained, the stator sub-assembly is placed in a curing oven. Referring now to Figure 2d, half way through the curing process, taking great care so as not to tear the slot liner 106, the four steel wires 110 are then gently pulled out and removed to expose the interstitial oil cooling flow passages 112. The curing process is continued so that the remaining varnish coating 116 will form a secondary dielectric insulation on the magnet wires as well as fuse the slot liner end papers and steel laminates, thus forming a means of primary containment for the cooling oil along with maintaining oil flow passages.

There are major problems associated with this cooling design and methodology. Keeping the interstitial area open along the longitudinal axis of the stator has proven to be very problematic since manufacturing variation in the cross-section tends to create relatively high fluid flow pressure drops. Another issue is that the varnish, being a thin liquid, does not completely fill the gaps between the slot liner end papers, top sticks and the steel laminates, thus compromising the integrity of the oil's primary containment. However, the biggest issue with this sealing technique is that incurred by the large temperature differential of 140 Centigrade degrees between the inner diameter of the stator and the outside diameter of its aluminum alloy casting. The different thermal coefficients of expansion of the elements, mainly in the stator slots, create a complex system of 3-dimensional expansion and contraction due to this temperature differential of the operating motor. This movement creates such stresses in these sealing joints that the glass-like crystalline structure of the varnish tends to fracture. Thus, these differential thermal expansions and contractions lead to the destruction of any sealing provided by the varnish. All these problems can be compounded to such a magnitude that the pressurized oil coolant will breach any flaw in its containment and flow radially towards the center of the stator, filling the air gap between the stator and rotor. At the relatively low speeds of 5,000 RPM or less, the cooling medium is churned and ground by the spinning rotor causing a drag force and hence mechanical losses to the output of the motor. At the maximum operating speed of 15,000 RPM, the cooling medium is subjected to heavy churning which not only results in major propulsion inefficiency, but causes high, localized temperatures that breaks down the oil's viscosity and hence, cooling capacity.

### SUMMARY OF THE INVENTION

Therefore it is an object of the present invention to provide a rotating machine with cooled hollow stator field windings which provides an increased amount of cooling than is provided by prior art methods for cooling rotating machines.

In order to increase heat conduction away from the field windings of a stator of a rotating machine, oil coolant is passed through the field windings. The rotating machine of the present invention utilizes a unique hollow conductor design that is much more thermally robust than the traditional solid conductor approach. This principle has been demonstrated to be readily manufacturable and resides within the economic producability of the motor.

In summary there is provided an improved rotating machine. The improved rotating machine comprises: a stator having a plurality of field winding slots; a plurality of field windings, at least one of which having an internal conduit, each field winding slot having at least one field winding disposed therein; and circulation means for circulating a coolant into and from the rotating machine through the internal conduit.

The rotating machine preferably also has a housing. The housing has a cavity for acceptance of the stator therein. The housing and stator define first and second plenums at first and second ends of the stator, the coolant entering the rotating machine into the first plenum and exiting the rotating machine from the second plenum.

The at least one field winding having the internal conduit further has at least one entry hole providing communication between the internal conduit and either of the first or second plenums. The at least one field winding further having an exit hole, wherein the coolant enters the internal conduit through the at least one entry hole and exits into the second plenum through the exit hole. Preferably, the at least one field winding having the internal conduit has an entry hole corresponding to each transverse section of the field winding.

The first and second plenums are preferably connected with an external conduit in which a pump is disposed for recirculating the coolant and a heat exchanger is disposed for removing heat from the re-circulated coolant.

Also provided is a top stick for securing a slot liner in the field winding slot of the stator. The field winding slot having a groove for acceptance of the top stick therein and the top stick having a tapered leading end for retaining a sealing material in the groove. Preferably, the tapered leading end is radiused.

Still yet provided is a method of sealing field windings in the field winding slot of the stator of the rotating machine of the present invention. The method comprises the steps of: applying a sealant material between the wall of each slot and the slot liner; applying the sealant between the uppermost field winding and the slot liner; closing the slot liner over the uppermost field winding; applying the sealant material over an upper surface of the closed slot liner; positioning a top stick over the closed end of the slot liner and in the groove whereby the leading end spreads out the sealant applied over the upper surface of the closed slot liner; and applying the sealant material to a juncture between the top stick and the groove. The sealant material is preferably a room temperature vulcanizing material.

### BRIEF DESCRIPTION OF THE DRAWINGS

These and other features, aspects, and advantages of the apparatus of the present invention will become better understood with regard to the following description, appended claims, and accompanying drawings where:

Figure 1 illustrates a conventional stack of field windings in a stator slot.

Figure 2a-2d illustrate a conventional method for creating coolant passageways in the stator slot of Figure 1.

Figure 3 illustrates a stator assembly of the present invention.

Figure 4 illustrates the gearbox side of the stator assembly of Figure 3.

Figure 5 illustrates the feed-through side of the stator assembly of Figure 3.

Figure 6 illustrates an enlarged view of the exit holes of the field windings of Figure 5.

Figure 7 illustrates a double loop field winding coil of the present invention.

Figure 8 illustrates the double loop field winding coil of Figure 7 with the loops separated from each other.

Figure 9 illustrates an enlarged sectional view of an entry hole of the field winding coils of Figures 7 and 8.

Figure 10 illustrates a stack of field windings of the present invention in a stator slot.

Figures 11a-11d illustrate a method for sealing the field windings of the present invention in the stator slot.

Figures 12a-12c illustrate the top stick of Figures 11a and 11b.

### DETAILED DESCRIPTION OF THE PREFERRED EMBODIMENT

Although this invention is applicable to numerous and various types of rotating machines, it has been found particularly useful in the environment of electric motors and generators. Therefore, without limiting the applicability of the invention to electric motors and generators, the invention will be described in such environment.

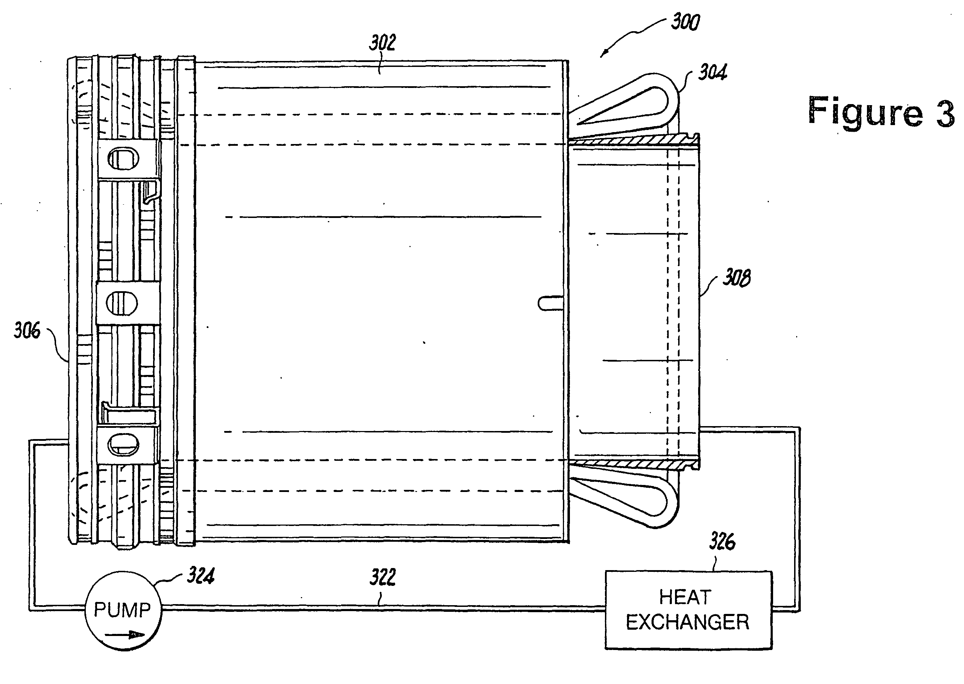

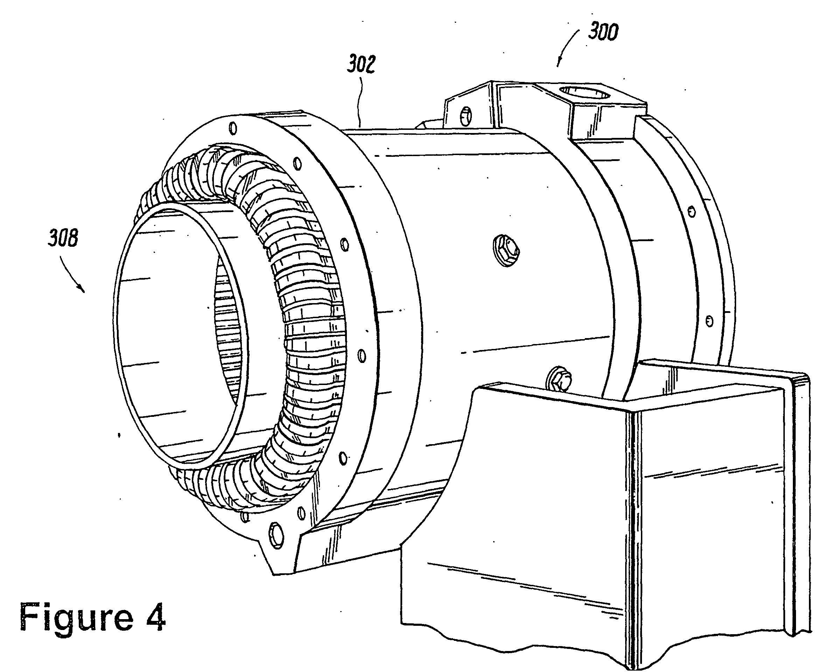

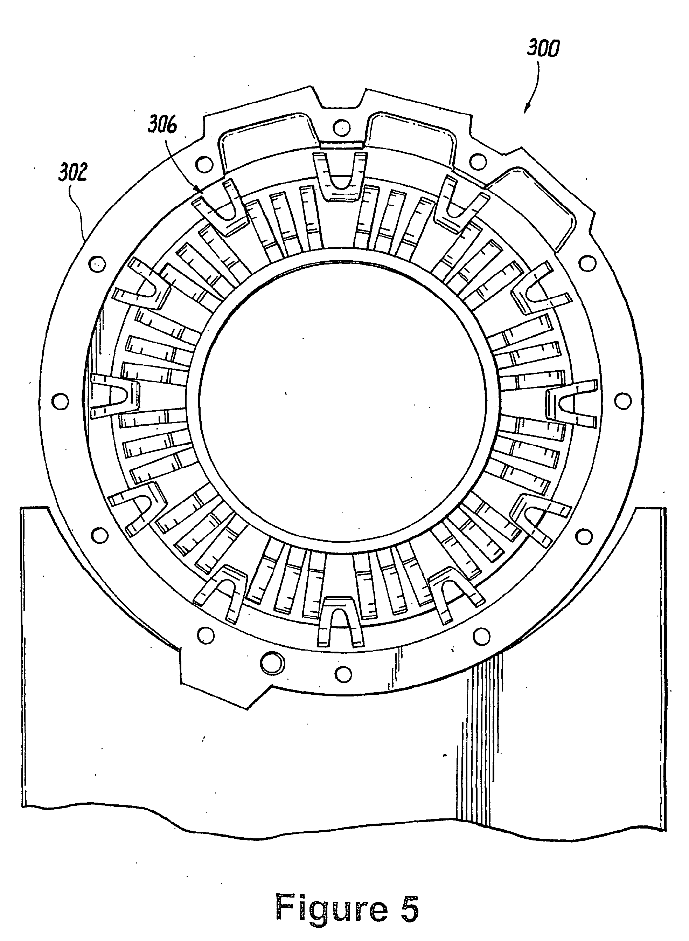

Referring now to Figure 3, there is illustrated a rotating machine of the present invention, the rotating machine being referred to generally by reference numeral 300. The rotating machine generally having a housing 302 encasing rotor (not shown) and stator assemblies 304. The rotating machine having a feed-through side 306 shown more clearly in Figure 5 and a gear-box side 308 shown more clearly in Figure 4.

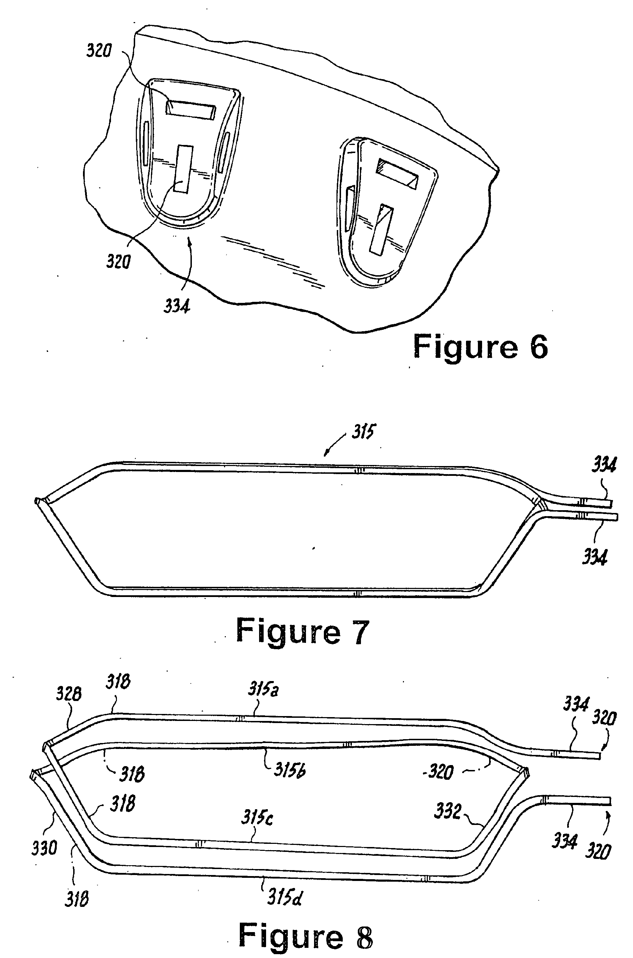

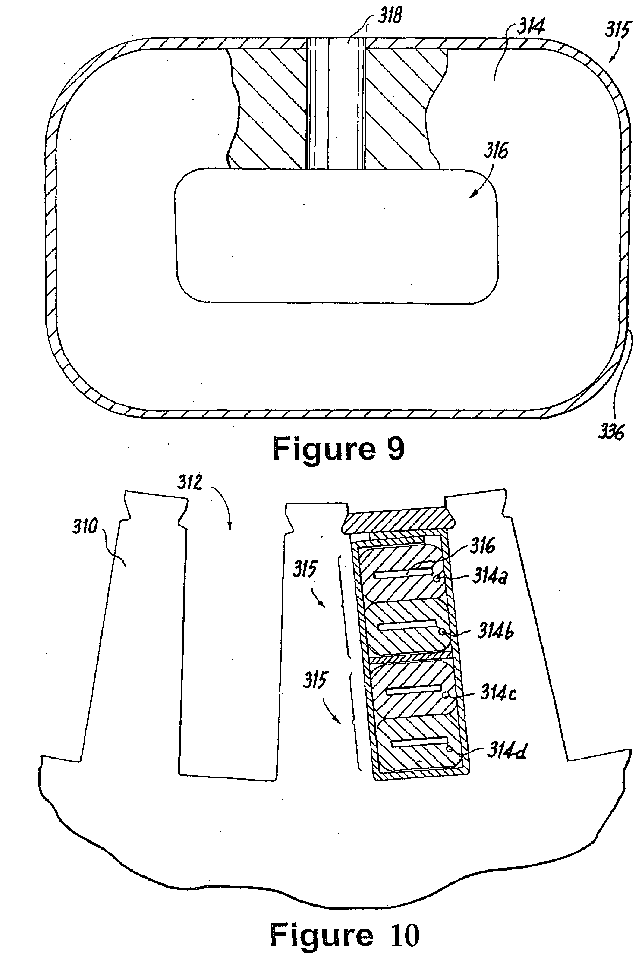

The stator assembly comprises a stator 310, a portion of which is illustrated in Figure 10. The stator 310 has a plurality of field winding slots 312 for housing at least one electromagnetic conductor 314, a loop of which is referred to as a field winding 315 (shown in detail in Figures 7, 8, and 9). The stator 310 of Figure 10 shows each stator slot 312 containing four electromagnetic conductors 314a-314d. Two of the conductors 314a and 314b are associated with one field winding, the other two conductors 314c and 314d are associated with another field winding. At least one of the electromagnetic conductors 314 and hence field winding 315 has an internal conduit 316. Preferably, each of the field windings has the internal conduit 316. The electromagnetic conductor 314 is preferably rolled or extruded to form the internal conduit 316. The field windings 315 are preferably rectangular in cross-section as is the internal conduit 316.

A circulation means circulates a coolant into and from the rotating machine 300 through the internal conduits 316 of the field windings 315. The stator 310 fits within a cavity in the housing 302 and defines plenums at the feed-through 306 and gearbox 308 ends of the stator 310. Coolant, such as oils known to those skilled in the art, enter the rotating machine 300 into the plenum at the feed-through side 306 and exit the rotating machine 300 from the plenum on the gearbox side 308.

Each of the field windings 315 having the internal conduit 316 have both an entry hole 318 (shown in detail in Figure 9) and an exit hole 320 (shown in detail in Figure 6). The entry hole 318 provides communication between the internal conduit 316 and either of the plenums on the feed-through 306 or gearbox side 308 of the rotating machine 300. Coolant enters from the plenum of the gearbox side 308 into the internal conduit 316 through the entry hole 318 and exits into the plenum of the feed-through side 306 of the rotating machine 300 through the exit hole 320, which is in communication with the gearbox side 308 of the rotating machine. Figure 6 illustrates two exit holes 320, each corresponding to a separate field winding 315, which have been brazed together to form the "T" cross-section evident in Figure 6. Another exit hole 320 is also provided for the field winding to minimize the distance the coolant must travel before exiting.

Referring back to Figure 3, the coolant is then re-circulated from the feed-through side 306 of the rotating machine 300 to the gearbox side 308 through an external conduit 322. A pump 324 is disposed in the external conduit 322 between the plenums on the feed-through and gearbox sides 308, 306 of the rotating machine 300 to circulate the coolant therein. A heat exchanger 326 is also disposed in the external conduit 322 for removing heat from the coolant re-circulated therein.

Referring now to Figures 7 and 8, there is illustrated a preferred implementation of a field winding 315 of the present invention. Figure 7 illustrates the field winding in a collapsed state. As can be seen more clearly in Figure 8, wherein the field winding 315 of Figure 7 is expanded, the field winding has four transverse sections 315a-315d. Transverse sections 315a and 315c are connected at one end by loop 328. Transverse sections 315b and 315d are connected at one end by loop 330. Transverse sections 315b and 315c are connected at another end by loop 332. Transverse sections 315a and 315d terminate at the other end at end faces 334 having the exit holes 320 (shown more clearly in Figure 6). The loops 328, 330, 332 and end faces 334 correspond to the plenums at the gearbox and feed-through sides 308, 306 of the rotating machine 300.

Since the internal conduit 316 transverses the entire length of the field winding 315, a single entry hole 318 can be provided anywhere on one of the loops of the field winding. However, a single entry hole 318 would require a large pressure differential between the first and second plenums to establish a coolant flow throughout all of the transverse sections of the field winding 315. Therefore, it is preferred that each of the four transverse sections 315a-315d has a corresponding entry hole 318. In this configuration, a much smaller and manageable pressure differential is needed to establish the coolant flow throughout the field winding 315. However, because the transverse sections 315a-315d are collapsed upon each other as shown in Figure 7, the entry holes 318 cannot be on surfaces which face each other when collapsed.

The hollow stator field windings represent a marked improvement over the traditional solid conductor stator described previously. When the rotating machine of the prior art is subject to a current of 600 Amps that is required for the 250 HP full load of the motor, up to 48 HP of equivalent heat power dissipation occurs as a result of electrical resistance heating {(I**2)*R} in the conductors. In the rotating machine of the present invention, and utilizing a pump delivery flow rate of 6 gallons per minute of Castrol 399 synthetic oil, at 15 psig pressure drop, only a 40° Centigrade temperature increase is empirically observed. This equates to the stator being able to be more than sufficiently cooled by the hollow conductors for steady state operating regimes. This extraordinary cooling enables the motor to be operated up to 350 HP, a 40% improvement above its normal 250 HP realm.

Thus the field windings of the present invention maximize oil coolant flow turbulence while keeping a minimum pressure differential and thus enhancing its convective film cooling characteristics. This allows the cooling medium to reach the very source where the heat is generated, the core of the electromagnetic conductors themselves. The present invention also enables a leak-proof and well-directed, positive oil flow along the length of the stator's longitudinal axis. Figure 9 illustrates a preferred cross-section of the field winding of the present invention. It should be apparent to those in the art that the cross-sectional area of the electromagnetic conductor is at least the same as that of a solid coil stator of the prior art, thereby ensuring that the designed current carrying capacity is not diminished. Also, what is also apparent is the decreased thermal resistance within the wire itself and the improved heat flow direction afforded by the hollow conductor design. In the field winding of the present invention, the thermal resistance from the electromagnetic conductor to the oil is decreased by bypassing the thermal resistance of the conductor's dielectric enamel insulation 336 (see Figure 9) and associated varnish and hence, the net direction of the heat flux is from the outside to the inside of the conductor. This provides for easier heat dissipation as the core of the conductor itself carries the cooling medium. This effect therefore tends to mitigate the thermal stress seen by the conductor's dielectric insulation 336 and varnish boundaries, thereby greatly reducing the risk of their breaking down and causing an electrical short circuit with the stator housing.

Thus, the rotating machine of the present invention represents a substantial improvement to the heat power dissipation and hence overall efficiency of a Hybrid Electric Vehicle system incorporating it therein. By ensuring the lightweight integrity and the package size of the prior art motor design envelope, the Hybrid Electric Vehicle community is well served by this unique technology innovation.

In another embodiment of the present invention, there is shown and described a method for sealing the field windings 315 of the first embodiment in the field winding slot 312. By using hollow electromagnetic conductors, a marked improvement in the liquid leak proofing of the stator is observed over the traditional solid wire stator described previously. the hollow field windings of the first embodiment represent an enhanced cooling technique for these conductors as well as minimizing the chance for cooling oil to leak past the stator laminates as it traverses along the stator's length. Despite this tremendous advance, leakage can still occur along the stator slot 312, should cooling oil bypass the entry holes 318 that feed the hollow conductors from the rotating machine's plenums.

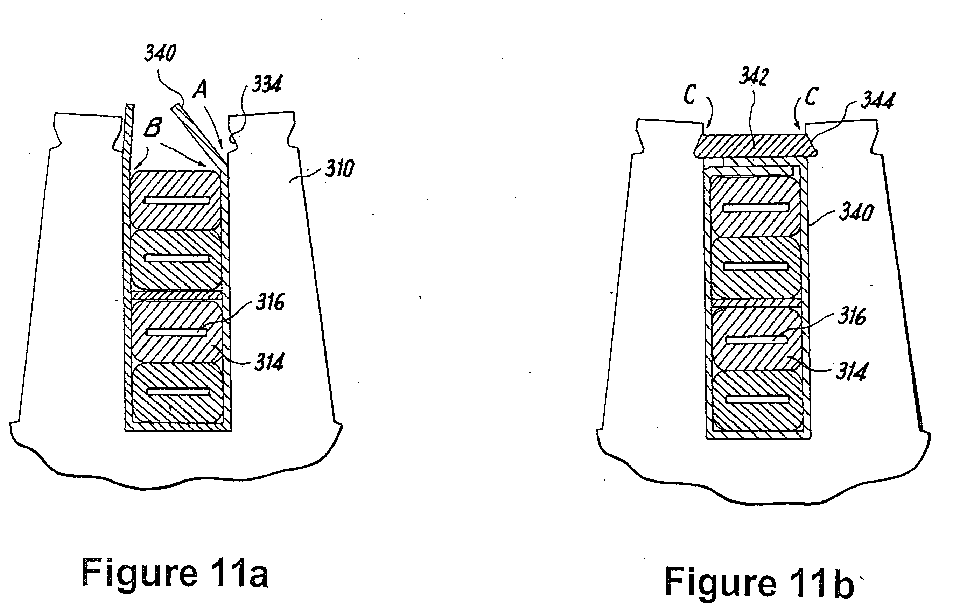

The innovative method of the second embodiment is illustrated in Figures 11a to 11d. What makes this innovation possible is the use of a material such as a Room Temperature Vulcanizing (RTV) material such as Loctite 587, which is an off-the-shelf, readily available material that exhibits properties such as heat and oil resistance at elevated temperatures, good elasticity after curing and the ability to seal large gaps, preferably larger than 0.007 inch. This sealant eliminates the total dependency on electrical insulating varnish. At Figure 11a, the sealant is administered along the length of the slot at point A to forge a liquid tight seal between a slot liner 340 and the stator lamination stack 310. The sealant, having a significantly higher viscosity than the varnish used in the prior art, does not thin or run down when it is applied, thereby sealing even large gaps as well as withstanding the coolant's operating pressures of up to 35 psig. As also illustrated in Figure 11a, the sealant is applied at point B between the interface between the slot liner 340 and the electromagnetic conductors 314, and the slot liner is closed over the uppermost field winding (as shown in Figure 11b).

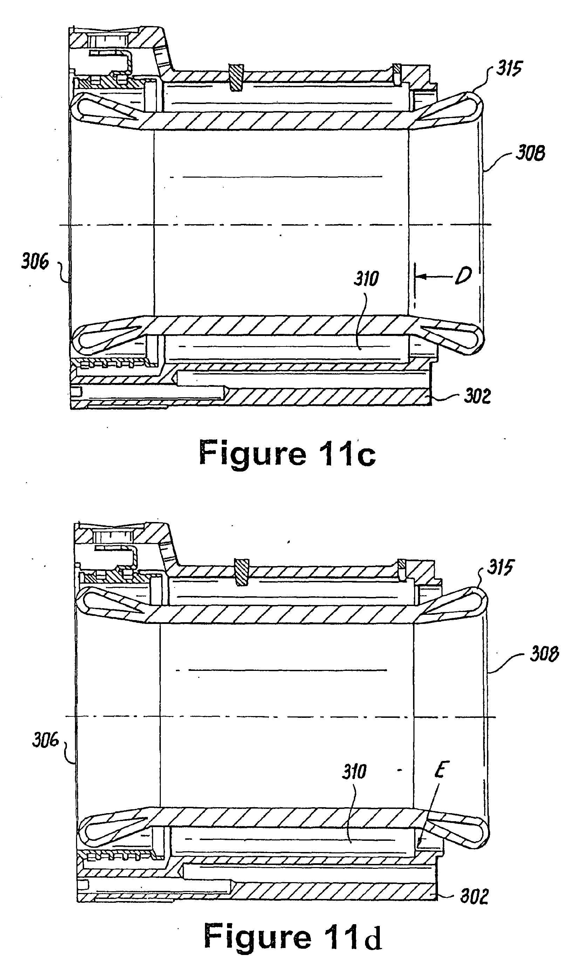

Referring now to Figure 11b, the sealant is then spread in a controlled manner via the leading end of a specially contoured top stick 342 that is mechanically positioned along the length of the slot 312 in groove 344, and over the top surface of that portion of the slot liner 340 which encloses the uppermost field winding. Additional sealant is then applied along point C at the joint formed between the upper surface of the top stick 342 and the shoulders of the laminated stator slot 312. These layers of protection directly prevent oil migration from the stator slot 312 to the air gap between the stator and rotor. Referring now to Figure 11c, one end of the stator slots is completely sealed at point D so that entry of oil into the slots is minimized and is diverted into the hollow conductor through the entry holes. Lastly, at Figure 11d, the sealant is applied at point E along the joints between the outer diameter of the stator laminates 310 and the inner diameter of the stator housing 302. Thus, the tendency to bypass the entry holes of the conductors is greatly minimized.

The RTV sealing material is preferably applied using an air-operated syringe-type dispenser that precisely applies the material at the required locations and tight corners. Preferably, a new type of varnish (such as P.D. George U475-EH) which exhibits superior dielectric and mechanical strength than the earlier varnish Doryl B-109-9, is also applied to the stator as described previously.

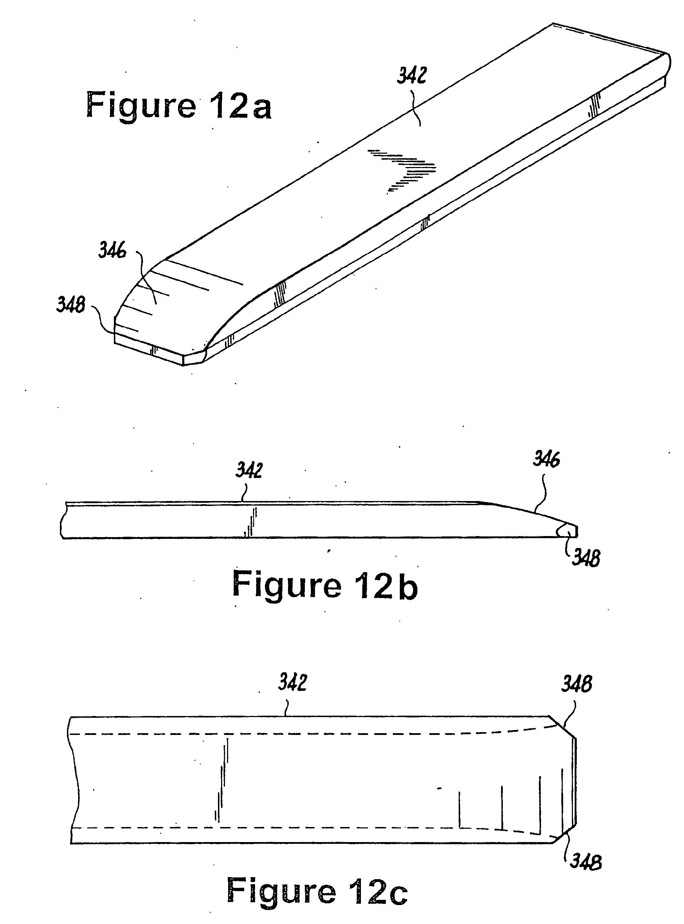

Referring now to Figures 12a-12c, the top stick 342 for each stator slot 312 is provided each having a smooth radius on both its face 346 and ends 348 that retain the sealing material at the joints and allows the sealant material to be controllably spread out rather than be arbitrarily pushed out during its installation.

Loctite 587 RTV, is chosen as a preferred sealant because it is an elastic material that thermally expands and contracts and accommodates seven different coefficients of expansion of the materials used in the stator such as, aluminum, steel, copper, NKN, G10, varnish, and PCGP-HT. It is also capable of withstanding the high varnish curing temperatures and subsequent machining and manufacturing processes and shows resistance to the varnish itself. Additionally, Loctite 587 adheres well to all the surfaces to be sealed and maintains the seal under all operating temperatures.

It should be apparent to those skilled in the art that Loctite 587 RTV and P. D. George U-475-EH varnish are used by way of example only and may be substituted with other equivalent substances that exhibit similar properties without departing from the scope or spirit of the present invention.

The second embodiment of the present invention represents a substantial improvement in the liquid leak-proof sealing of liquid cooled stators and hence overall efficiency of a Hybrid Electric Vehicle system incorporating it therein. Using the second embodiment of the present invention, the orderly, well-contained cooling liquid flow is able to effectively dissipate the {I**2}R losses from electrical power transmission as well as avoid mechanical losses and damage from hydrodynamic drag and cavitation effects. The low cost and forthright use of the sealing technique allows for the lightweight integrity, compact package size, and practicality of rotating machines. The multiple layers of sealing provide a sound, reliable, liquid-tight but yet elastic and semi-permanent joint. This provides the opportunity for reconditioning or rebuilding of the stator, if needed, thereby extending the life and value of the stator core.

While there has been shown and described what is considered to be preferred embodiments of the invention, it will, of course, be understood that various modifications and changes in form or detail could readily be made without departing from the spirit of the invention. It is therefore intended that the invention be not limited to the exact forms described and illustrated, but should be constructed to cover all modifications that may fall within the scope of the appended claims.

## Claims

1. A rotating machine comprising:
a stator having a plurality of field winding slots;
a plurality of field windings, at least one of which having an internal conduit, each field winding slot having at least one field winding disposed therein; and
circulation means for circulating a coolant into and from the rotating machine through the internal conduit.

2. The rotating machine of claim 1, further comprising a housing, the housing having a cavity for acceptance of the stator therein, the housing and stator defining first and second plenums at first and second ends of the stator, the coolant entering the rotating machine into the first plenum and exiting the rotating machine from the second plenum.

3. The rotating machine of claim 2, wherein the at least one field winding having the internal conduit further having at least one entry hole providing communication between the internal conduit and either of the first or second plenums, the at least one field winding further having an exit hole, wherein the coolant enters the internal conduit through the at least one entry hole and exits into the second plenum through the exit hole.

4. The rotating machine of claim 3, wherein the at least one field winding having the internal conduit has an entry hole corresponding to each transverse section of the field winding.

5. The rotating machine of claim 2, wherein the at least one field winding having the internal conduit further having an exit hole in communication with the second plenum, the coolant leaving the internal conduit through the exit hole into the second plenum for re-circulation into the first plenum, the first and second plenums being connected with an external conduit.

6. The rotating machine of claim 5, wherein the circulation means comprises a pump disposed in the external conduit between the first and second plenums.

7. The rotating machine of claim 5, further comprising a heat exchanger disposed in the external conduit between the first and second ends for removing heat from the coolant re-circulated therein.

8. The rotating machine of claim 1, wherein each of the plurality of field windings has the internal conduit.

9. The rotating machine of claim 1, wherein the at least one field winding having the internal conduit is rectangular in cross-section and the internal conduit is rectangular in cross-section.

10. The rotating machine of claim 1, further comprising:
a slot liner disposed in each of the field winding slots between the at least one field winding disposed in the field winding slot and a wall of the field winding slot; and
a top stick positioned along a corresponding groove in a length of each of the field winding slots to secure the slot liner therein, the top stick having a tapered leading end for retaining a sealing material in the groove.

11. The rotating machine of claim 10, wherein the tapered leading end is radiused.

12. A top stick for securing a slot liner in a field winding slot of a stator for a rotating machine, the winding slot having a groove for acceptance of the top stick therein, the top stick having a tapered leading end for retaining a sealing material in the groove.

13. The rotating machine of claim 12, wherein the tapered leading end is radiused.

14. In a rotating machine comprising a stator having a plurality of field winding slots, a plurality of field windings, at least one of which having an internal conduit, each field winding slot having at least one field winding disposed therein, a slot liner disposed in each of the field winding slots between the at least one field winding disposed in the field winding slot and a wall of the field winding slot; and a top stick positioned along a corresponding groove in a length of each of the field winding slots to secure the slot liner therein, the top stick having a tapered leading end for retaining a sealing material in the groove, a method of sealing the field windings in the field winding slot of the stator of the rotating machine, the method comprising the steps of:
applying a sealant material between the walls of each slot and the slot liner;
applying the sealant material between both sides of the uppermost field winding and the slot liner;
closing the slot liner over the uppermost field winding;
applying the sealant material over an upper surface of the closed slot liner;
positioning the top stick over the closed end of the slot liner and in the groove whereby the tapered leading end spreads out the sealant applied over the upper surface of the closed slot liner; and
applying the sealant material to a juncture between the top stick and the groove.

15. The method of claim 14, further comprising the step of applying the sealant material to an end face of each of the field winding slots.

16. The method of claim 14, further comprising the step of applying the sealant material between an outer diameter of the stator and an inner diameter of a housing containing the stator.

17. The method of claim 14, wherein the positioning step comprises sliding the leading end of the top stick in the groove from a first end of each field winding slot to a second end of each field winding slot.

18. The method of claim 14, wherein the sealant material is a room temperature vulcanizing material.

19. The method of claim 18, wherein the room temperature vulcanizing material is a primary sealant material and a secondary insulating material is applied over the primary sealant material

20. The method of claim 19, wherein the secondary insulating material is a dielectric insulating varnish.
